# EUROPEAN PATENT APPLICATION

(11) **EP 1 517 128 A2**
(43) Date of publication of application: **23.03.2005**
(21) Application number: 04255349.5
(22) Date of filing: 03.09.2004
(51) Int. Cl.: G01M 3/28, G01M 3/32

(54) **Device and method for testing the fluid-tightness of a system by monitoring pressure**

(30) Priority: 04.09.2003 GB 0320696; 24.12.2003 GB 0329967
(71) Applicant: Pickering, Robert Maxwell, Holmfirth, Huddersfield HD9 5HD (GB)
(72) Inventor: Pickering, Robert Maxwell, Holmfirth, Huddersfield HD9 5HD (GB)
(74) Representative: Atkinson, Ralph

(57) **Abstract**

Water pressure is monitored in a system. A first condition is detected when the water pressure has dropped below a predetermined value. In response to detecting the first condition, additional water is introduced into the system. A second condition is detected when said first condition has been detected as occurring for too long or occurring too often. Water is prevented from being introduced upon detecting the second condition.

## Description

### Background of the Invention

### 1. Field of the Invention

The present invention relates to monitoring apparatus having pressure detection means, a system for conveying fluid within a closed system and detection means for application within a central heating system.

### 2. Description of the Related Art

Many environments are known in which fluids are transported within a system. An example of such a system is that used for the transportation of heat such as that encountered within a central heating system.

Central heating systems and similar heat transfer systems are known in which the transfer of fluid takes place at substantially atmospheric pressure. Loss of fluid may occur, possibly in response to normal operating conditions or due to the presence of leaks etc. In systems operating at atmospheric pressure, it is known to provide for the automatic reintroduction of fluid by the provision of a header tank or similar apparatus. Thus, a known advantage of these systems is that, assuming no leaks are present, the introduction fluid into the system occurs automatically as water or other liquids are derived from the header tank.

Over recent years, there has been a trend towards the establishment of pressurised systems (in central heating systems and in other environments) where several advantages are known. A primary advantage for the use of pressurised systems in central heating applications is that the water (as the working fluid) provides superior heat transfer characteristics, thereby enhancing overall efficiency. It is known to include pressure detectors in such systems such that, should a leak or similar failure occur, heating apparatus are automatically shut down so as to make the system safe and so as to minimise damage that may occur by the water starting to boil.

A problem with pressurised systems of this type is that a fault causing a shut down of the system will result in service personnel being called out to correct the fault and then reintroduce new fluid. Consequently, a minimal loss of fluid, possibly through evaporation or through radiator venting etc, may result in an expensive call out. Subsequently, personnel may be called out on several occasions over a period of months before a problem is eventually isolated and corrected.

### Brief Summary of the Invention

According to a first aspect of the present invention, there is provided monitoring apparatus having pressure detection means, a valve and processing means, wherein said processing means is configured to: receive an input signal from said pressure detection means; assess whether said input signal represents a satisfactory condition or a first unsatisfactory condition; and activate said valve if said input signal represents said first unsatisfactory condition.

### Brief Description of the Several Views of the Drawings

*Figure 1* illustrates a central heating system;
*Figure* 2 identifies operational states of the system shown in Figure 1;
Figure 3 details a monitoring device shown in Figure 1;
Figure 4 details the electronic circuitry contained within the monitoring device shown in Figure 3;
Figure 5 shows a summary of instructions stored in the micro-controller identified in Figure 4;
Figure 6 details the pressure monitoring step identified in Figure 5;
Figure 7 details the lockout process identified in Figure 6;
Figure 8 details the re-pressurisation procedure identified in Figure 6;
Figure 9 details the assertion of a satisfactory condition identified in Figure 6;
Figure 10 shows an illustration of timing operations.

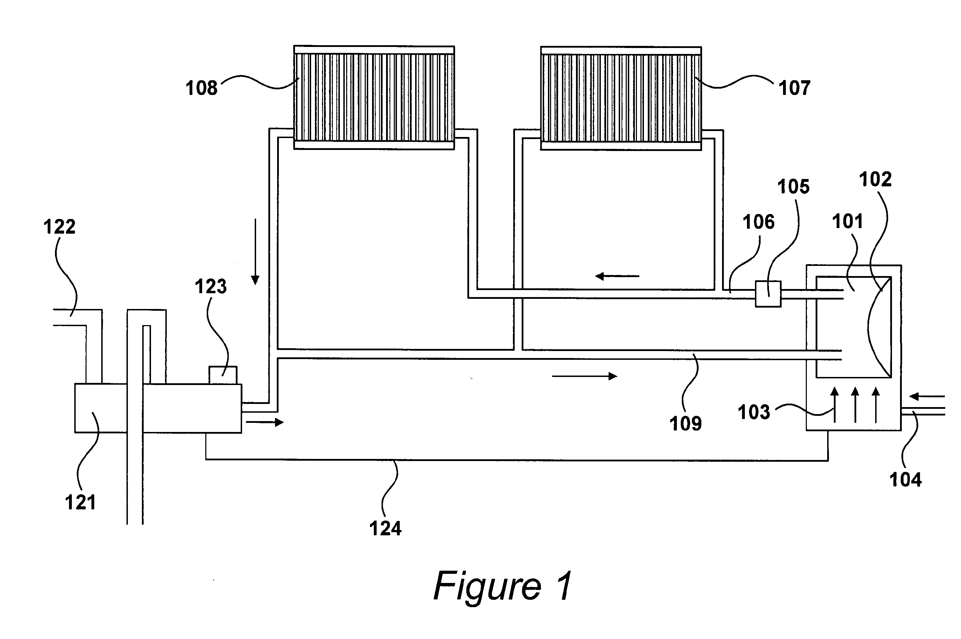

### Written Description of the Best Mode for Carrying Out the Invention Figure 1

To illustrate operation of preferred embodiments of the present invention, they will be described with respect to a central heating system, although it should be appreciated that the invention has application in other environments.

A central heating system is shown in Figure 1 in which water is contained within a pressure vessel 101. The pressure vessel 101 includes a membrane 102 present to allow changes in operating pressure within a closed system. A heat source 103 provides heat to the pressure vessel 101 which, in this example, is achieved by burning gas received from a gas inlet main 104.

Hot water from the pressure vessel 101 is pumped by means of a pump 105 into a hot water inlet pipe 106. The hot water inlet pipe 106 provides hot water to a plurality of radiators, such as radiator 107 and radiator 108. At each of the radiators, heat is given up to the surroundings resulting in the flowing water being cooled and thereby returned to the pressure vessel 101 via a return inlet pipe 109.

The system is designed to operate at pressures above atmospheric pressure. A typical operating pressure would be 1.5 bar gauge pressure in a domestic environment rising to an operational pressure of typically 10 bar gauge for large buildings etc. Within this range, the system is designed to operate at a particular pressure resulting in optimum heat transfer and optimum efficiency. It is undesirable for pressure within the system to drop too far so as to approach atmospheric pressure, which will tend to result in the water contained within the pressure vessel 101 to boil and thereby introduce steam into the system. Initially, operation at undesirable low pressures will result in inefficient operation but will ultimately cause damage to the system which will in turn tend to create leaks resulting in further pressure loss and ultimate shut down.

It has been appreciated that two conditions exist where pressure reductions may be identified. A first unsatisfactory condition exists when a temporary loss of pressure has occurred, possibly due to a radiator being vented or water being lost through some other means. Under these circumstances the system does not necessarily include a fault and normal operation may be re-established by the reintroduction of further water thereby bringing operational pressures back to their optimum levels. If a leak does exist, this will result in continual pressure losses and this situation may in turn be identified as a second unsatisfactory condition. When a second unsatisfactory condition of this type exists, it is necessary for the system to be shut down and repaired before it is brought back up to operational pressure. Thus, major failures need to be identified so as to minimise leakage (which may cause damage), reducing the risk of further damage and identifying a situation to the effect that manual intervention is required in order to effect a repair. However, the first unsatisfactory condition does not require manual intervention and can be quickly rectified if provision is made for the reintroduction of lost water.

The present preferred embodiment includes a monitoring device 121 connected to a mains water inlet 122. The monitoring device 121 includes a pressure detector 123 capable of detecting a situation where operating pressure has fallen below a desirable threshold. Upon identifying this condition, a solenoid valve is operated so as to introduce water into the system from a mains supply 122. This continues until an upper threshold has been reached whereupon the solenoid valve is closed and normal operation of the system is then permitted. However, should repeated failures occur within a short period of time, the monitoring device identifies this as an unsatisfactory condition of the second type resulting in a signal being transmitted on transmission line 124 to the heat source 103 to the effect that the heat source should be shut down and service personnel called into attendance.

### Figure 2

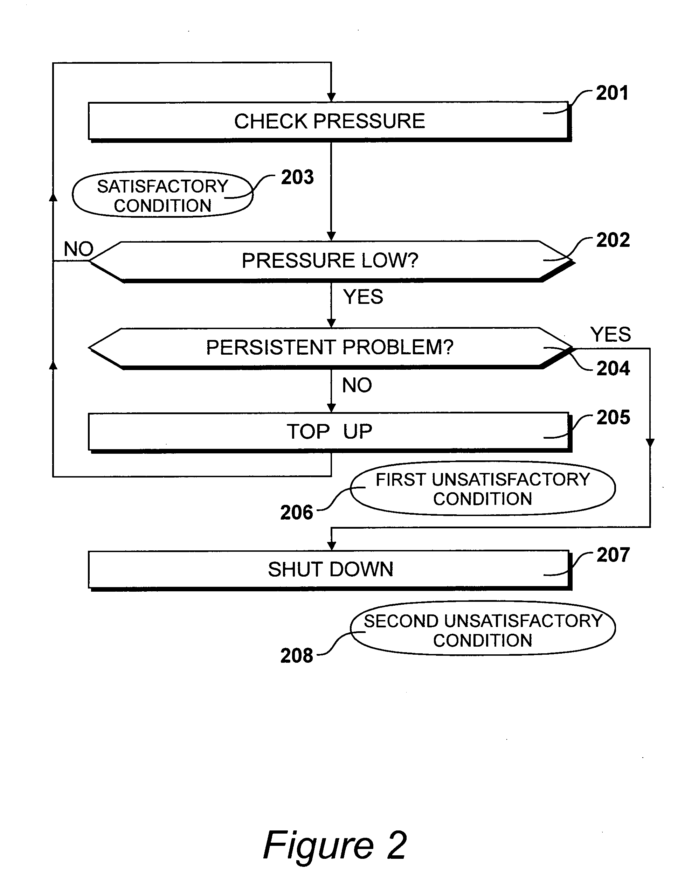

Operational states for the system shown in Figure 1 are illustrated in Figure 2. At step 201 the pressure of the system is checked and a question is asked at step 202 as to whether the pressure is low. If the pressure in the system is not low the question at step 202 is answered in the negative by representing a satisfactory condition 203.

If the question asked at step 202 is answered in the affirmative, to the effect that a low pressure condition does exist, a further question is asked at step 204 as to whether this is a persistent problem. If the question asked at step 204 is answered in the negative, to the effect that this is not considered to be a persistent problem the system is topped up at step 205 because a first unsatisfactory condition 206 has been identified. Thereafter, the pressure is checked again at step 201.

If the question asked at step 204 is answered in the affirmative, to the effect that the problem is considered to be persistent, this results in a second unsatisfactory condition 207 being identified and the system is shut down at step 208.

### Figure 3

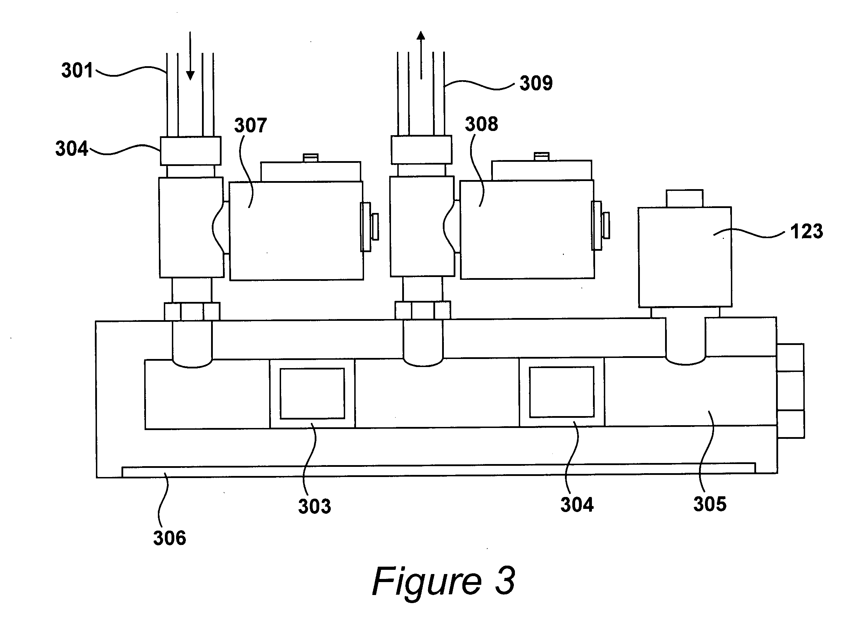

The monitoring device 121 is detailed in Figure 3. The device is self contained and is attached via a coupling either to the output side or to the return side of the heating system; the device being shown on the return side in Figure 1. The unit is also attached via a self-sealing 8mm tube 301 and an adapter 302 to a mains water inlet. To prevent any back siphoning (and so as to comply with water regulations) a first non-return valve 303 and a second non-return valve 304 are fitted within a fluid cavity 305.

The device includes on-board electronics mounted on circuit board 306 which communicate with pressure switch 123, first solenoid valve 307 and the second solenoid valve 308. A preferred embodiment is configured to operate at pressures of between 0.5 bar to 6 bar gauge and the nominal range for most domestic applications is usually between 0.5 to 1.5 bar.

A central heating system can lose pressure in a variety of ways, such as by natural evaporation within the system due to the manual venting of radiators, the presence of auto air vents in-line and the presence of boiler air vents. Faulty blow-off valves can also create problems, with occasional failures occurring that may not necessarily lead to total system shut down.

In a preferred embodiment, the unit detects any loss of fluid which will cause the system pressure to drop by 0.9 bar before being placed in an operational activation state. Upon activation, it is preferable for the electronics to monitor the system through pressure switch 123 such that, where appropriate, the electronics activates solenoid valves 306 and 307 so as to allow water to pass into the system until operational system pressure is restored, such as an operational pressure of 1.4 bar gauge.

In the preferred embodiment, the electronic assembly will allow the topping up procedure to operate three times in a given period of time, which can be adjusted. The electronics monitors the system and checks it every ten seconds; under these conditions the system may be considered as being in a semi-dormant state. When the pressure drop reaches 0.9 bar, the system is brought to full readiness by the electronics increasing the monitoring time such that a check is now made every five seconds. The system is configured so as to auto fill when the pressure drops to 0.7 bar and the electronics will allow three top-ups to occur in a set period of time, such as fifteen minutes. The electronics measures the time interval between the first top-up and the second top-up, and the time interval between the second top-up and the third top-up, whereafter comparisons are made with pre-stored parameters. These pre-stored parameters allow for slow pressure drops due to natural water loss within the system which may be considered as slow leaks.

When detected pressure drops occur more quickly than as allowed by the pre-stored parameters, the electronics is programmed to be sensitive to this situation so as to establish the presence of a leak that is not considered to be allowable within operational parameters. Upon detecting this second unsatisfactory condition (representing a major leak) the heating system is shut down and a warning is provided visually (and possibly audibly) thereby establishing a warning to the effect that a major system leak has occurred. Thus, upon detecting this condition, the overall system is shut down and cannot be brought back to an operational state until the system has been attended by service personnel.

In this way, it is possible for unnecessary callouts to be avoided because pressure loss due to normal operation is corrected automatically by the introduction of additional water. However, a shut down will occur when a major leak is detected thereby preventing the system from flooding and preventing damage due to the water being caused to boil.

The pressure switch 123 exhibits hysteresis such that it will be forced into an open state when the pressure drops to, say, 0.7 bar and is then placed back into its closed state only when the pressure exceeds, say, 1.2 bar. A suitable switch for this purpose is a GEM PS-J, suitable for operating at a process temperature of between minus twenty and plus eighty degrees centigrade (-20°C and +80°C). On site adjustable metal blade contacts are provided. In this way, course adjustments may be made initially whereafter on site fine tuning may be affected so as to configure the switching pressures at positions appropriate for a particular installation.

Under normal operating conditions, solenoid valve 307 is closed and solenoid valve 308 is open. Should valve 307 fail, resulting in water being allowed to enter the fluid cavity 305, any such water will be vented to atmosphere via an outlet pipe 309. When additional water is being introduced into the system, valve 308 is closed prior to valve 307 being opened. Water then passes through non-return valve 303 and through non-return valve 304 so as to enter the system. Upon completion of the filling-up procedure, valve 307 is closed and valve 308 is re-opened such that it is not possible for any further water to pass through non-return valve 304. Under any power failure conditions, this situation would be maintained by valve 308 being open in its non-activated condition.

### Figure 4

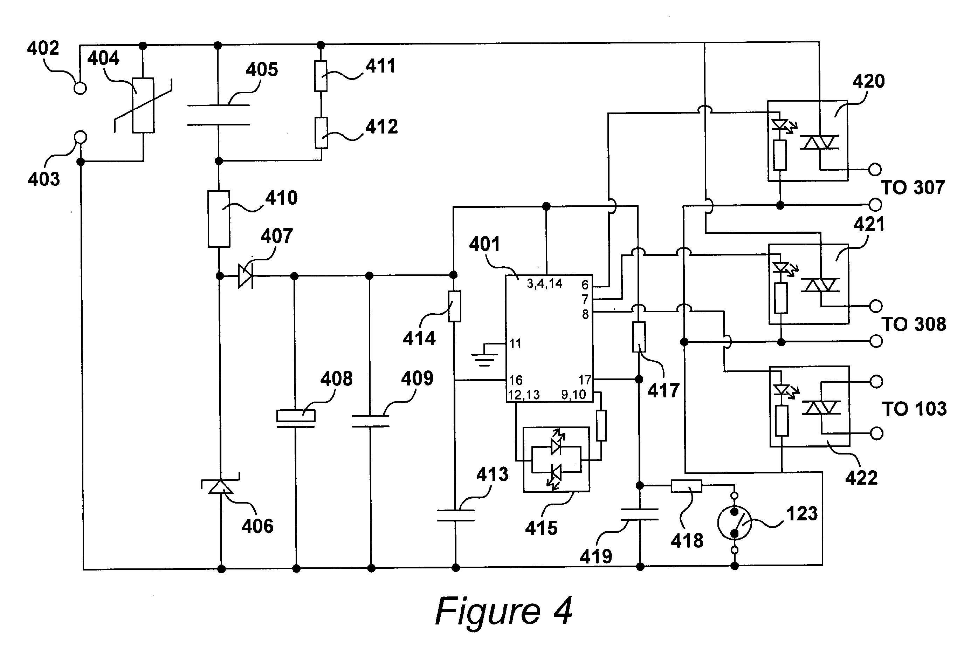

Circuitry contained on circuit board 306 is detailed in Figure 4. The circuit is based around a micro-controller 401, such as a PIC16CLC54C produced by Microchip Technology Inc of Chandler Arizona. The micro-controller 401 has five hundred and twelve words of non-volatile instruction memory and twenty-five bytes of static random access memory (RAM).

Power is derived from a mains supply with live being connected to a terminal 402 and neutral being connected to a terminal 403. High voltage transients are suppressed by a suppresser 404 and the high mains voltage is reduced by a capacitor 405 (680nF) in combination with a zener diode 406 across which a voltage of approximately five and a half volts (5.5V) is developed.

Rectification is provided via rectifier diode 407 and smoothing is provided by an electrolytic capacitor 408 (220 micro F). Further transient suppression is provided by a ceramic capacitor 409 (100nF) in combination with a resistor 410 (270R, 2W) forming an RC low pass filter. A direct current supply of around 5 volts is thereby supplied to Pins 3, 4 and 14 of the micro controller 401.

When power is removed from the circuit, charge may remain across the supply capacitor 405, having a high voltage that could damage components during servicing operations. Consequently, discharge resistors 411 (100K) and 412 (100K) are provided to discharge the capacitor safely when power is removed; two resistors being provided to reduce the danger of high voltage damage to these components.

Micro-controller 401 provides an internal clock oscillator with timing being determined by a capacitor 413 (100pF) and a resistor 414 (3K3) connected to Pin 416. The values of these two components define the frequency of the internal oscillator, preferably set to 3.3 megahertz resulting in an instruction execution rate of about eight hundred thousand instructions per second. At this rate, the micro-controller 401 requires a negligible amount of current, in the order of less than 1 milliamp. Consequently, most of the supplied power is consumed by optical components present in the rest of the circuit. A by directional light emitting diode (LED) 415 provides a red, a green or an alternating red/green visual indication of the state of pressure monitoring.

Pressure switch 123 provides data input to Pin 17 of the micro-controller 401. The switch is open at conditions of low pressure, during which a pull down resistor 417 (10K) provides a plus 5 volt or logic 1 input to the micro-controller 401. A resister 418 (470R) and a capacitor 419 (100nF) form a low pass RC filter that removes transients during switching and further transient removal is performed by the micro-controller's instructions, in the form of a de-bouncing procedure. As a result, data input to the micro-controller 401 reflects the true state of the pressure threshold measurement made by the pressure switch 123 and ignores false transient switching pulses that are developed during switching.

A first solid state relay 420 is controlled by pin 6 of the micro-controller 401 which connects to solenoid valve 306 so as to control the state of this valve. When pin 6 is set to plus 5 volts or Logic 1, the valve is set to open, thereby allowing water to flow into the fluid cavity 305. A second solid state relay 421 connects to valve 307. Pin 7 of the micro-controller 401 controls the state of solenoid valve 307 such that when pin 7 is set to plus 5 volts or Logic 1, valve 307 is set to its closed condition, thereby preventing inlet water being released to atmosphere. A third solid state relay 422 is controlled by pin 8 of the micro-controller 401. This relay is connected to heat source 103 via transmission line 124. When pin 8 is set to plus 5 volts or Logic 1, the circuit conducts thereby allowing heating to take place. Similarly, when placed in a Logic 0 condition, the heat source is disabled thereby making the system safe.

### Figure 5

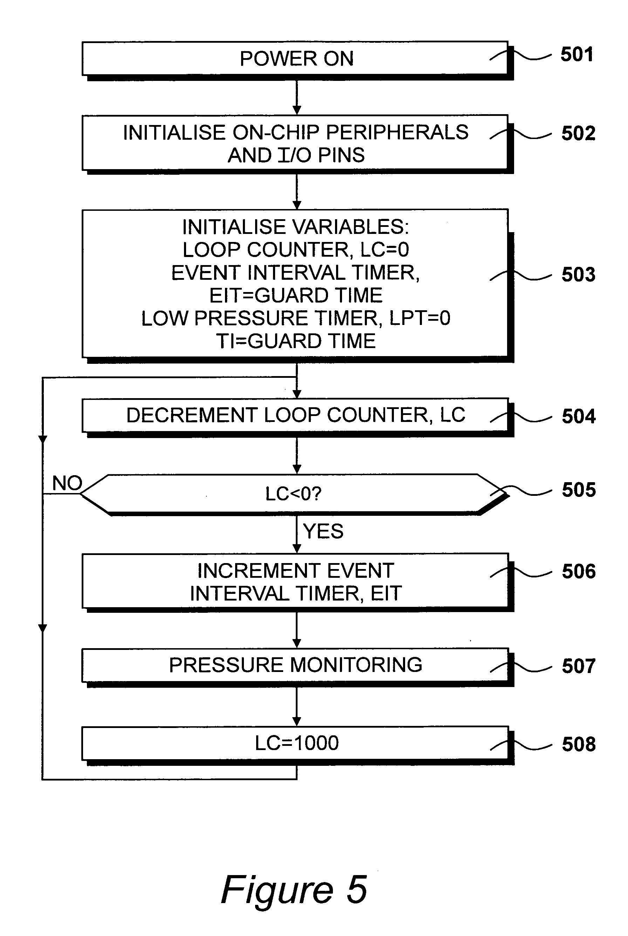

Instructions stored in the non-volatile memory of the micro controller 401 are summarised in Figure 5. At step 501 power is supplied such that instruction execution is initiated by the on-board reset circuit. At step 502 on chip peripherals and input/output (I/O) pins are initialised. Pin 17 is set as an input pin, with pins 6, 7, 8, 9, 10, 12 and 13 being set as output pins for controlling the solid state relays 420, 421, 422 and by directional LED 415.

At step 503 a number of states and variables are initialised. Output pins 6, 7 and 8 are set so that valve 307 is closed, valve 308 is open and the heat source circuit is on.

A loop counter (L.C.) is set to zero and an event interval timer (EIT) is set to the guard time. The guard time is the minimum time between successive low pressure events. A low pressure timer (LPT) is set to zero and this measures the period of continuos low pressure which has a maximum, after which the heat source must be made safe. A variable T1 is also set to the value of the guard time.

At step 504 the loop counter is decremented and at step 505 the loop counter is tested. If the loop counter is greater than or equal to zero, control is directed to step 504. Alternatively, control is directed to step 506, at which the event interval timer is incremented.

At step 507 pressure monitoring is performed. After performing the pressure monitoring step, the loop counter is reset to a value of one thousand at step 508 and control is directed back to step 504. The overall effect is to cause periodic execution of pressure monitoring instructions approximately twenty times per second. This periodicity is, in turn, used to determine timing intervals for the various states of the system using timers including the event interval timer.

### Figure 6

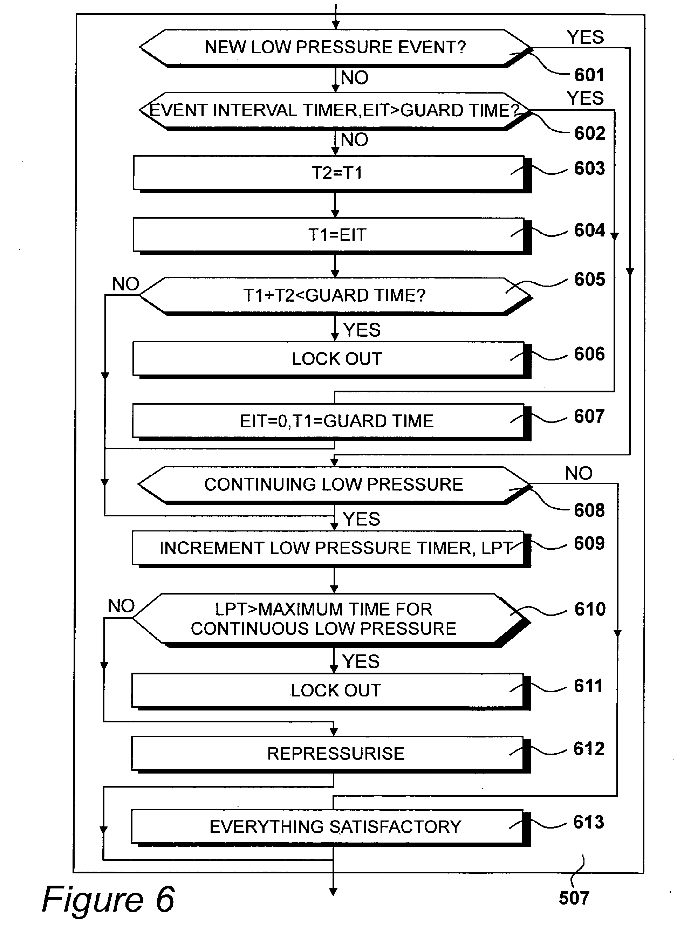

The pressure monitoring step 507 is detailed in Figure 6. At step 601 a question is asked as to whether a new loop pressure event has been detected. This includes monitoring the state of the pressure switch 123, debouncing to remove transience and comparing with the previously monitored state of the switch. If a new low pressure event is not detected, control is directed to step 607. When a new pressure event is detected at step 602 a question is asked as to whether the interval timer has incremented beyond the guard time. If so, it is known that the frequency of recent low pressure events is not yet high enough to require the heat source to be shut down. Control is therefore directed to step 607 where the event interval timer is reset to zero to enable measurement of the next interval between low pressure events.

A variable T1 is set to the guard time. This value is accessed when the interval between two successive low pressure events, measured by the event interval timer is less than the guard time.

If the value of the event interval timer is less than the guard time, when measured at step 602, this indicates possible cause for concern. At step 603 a variable T2 is assigned a value of variable T1. At step 604 the value of variable T1 is set to the current value of the event interval timer. In combination, step 603 and 604 have a pipe-lining effect, where the value of the event interval timer on the first iteration is stored in T1 and on the second iteration, due to the second low pressure event being within the guard time, variable T2 takes on the first value of the event interval timer and then variable T1 takes on the second value of the event interval timer.

At step 605 the sum of variable T1 and T2 is compared with the guard time. If this sum is less than the guard time, this indicates a critically high frequency of low pressure events (a second unsatisfactory condition) given that three low pressure events have now occurred within the guard time, as measured by two intervening periods T1 and T2. Thus, if this condition is detected, control is directed to step 603 resulting in a lockout being performed and the heat source being shut down.

After a non-critical low pressure event has occurred, step 607 is followed by steps 609 to 613. At step 601, it is also possible that a continuing low pressure event is being monitored. At step 608 a question is asked as to whether this is the case. If not, the pressure is satisfactory and the system is operating in accordance with a satisfactory condition; this position being a asserted at step 613. Alternatively, control is directed to step 609.

At step 609 the low pressure timer is incremented. The low pressure timer measures the duration of a low pressure condition. If this continues longer than a pre-determined threshold, a heat source shut down is required. At step 610 a question is asked as to whether the value of the low pressure timer is greater than the maximum time permitted for a continuous low pressure condition. If so, control is directed to step 611 at which a lockout is performed and the heat source is shut down. Thus, a low pressure condition existing for a long period of time also asserts a second unsatisfactory condition. Referring to Figure 2, regular pressure loss or sustained pressure loss are both conditions identified as a persistent problem.

If a persistent problem is not identified such that a first unsatisfactory condition has been asserted, re-pressurisation is performed at step 612. This re-pressurisation process could be a continuation of a re-pressurisation started on an earlier cycle.

### Figure 7

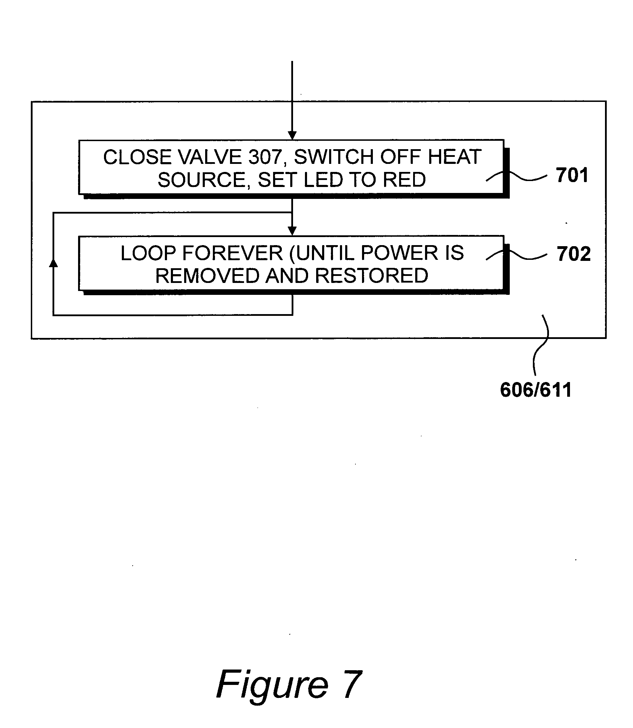

The lockout process performed at step 606 (and the lockout process performed at step 611) in Figure 6 are detailed in Figure 7. At step 701 valve 307 is closed, thereby preventing any further attempt at re-pressurisation. This is achieved by sending a Logic 0 to the solid state relay 420. The heat source is switched off by sending the Logic zero to solid state relay 422. Furthermore, light emitting diode 415 is set to emit a continuous red colour.

At step 702 an infinite loop is entered. This freezes the system into a safe condition until power has been removed by service personnel. A reset button is not included since this creates a temptation for unqualified personnel to press said button in order to encourage the systems to start working again. Clearly, a reset under these conditions could result in damage to the heating system and/or flooding.

### Figure 8

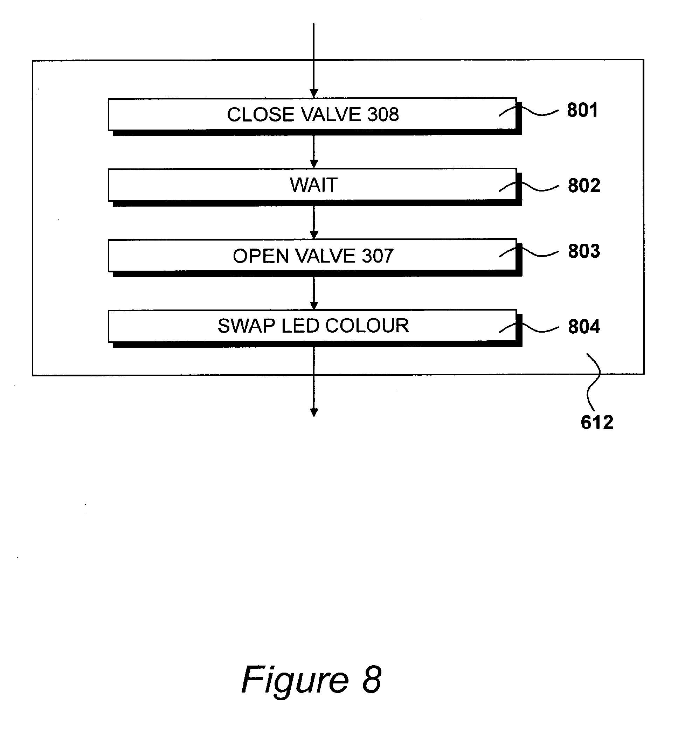

Step 612 shown in Figure 6, for the re-pressurisation procedure, is detailed in Figure 8. At step 801 valve 308 is closed so as to prevent water being released to atmosphere. Thereafter, the process enters a short wait state at step 802 so as to ensure that the valve has been fully closed.

At step 803 valve 307 is opened so as to allow water to enter the system from the mains supply and thereby re-pressurise the system.

At step 804 the colour emitted by LED 415 is swapped in response to a flicker counter. The flicker counter is incremented, thus controlling colour swapping and reducing its frequency, to somewhat less than the twenty hertz loop frequency of the main instruction execution loop. The flickering condition indicates that re-pressurisation is being performed.

### Figure 9

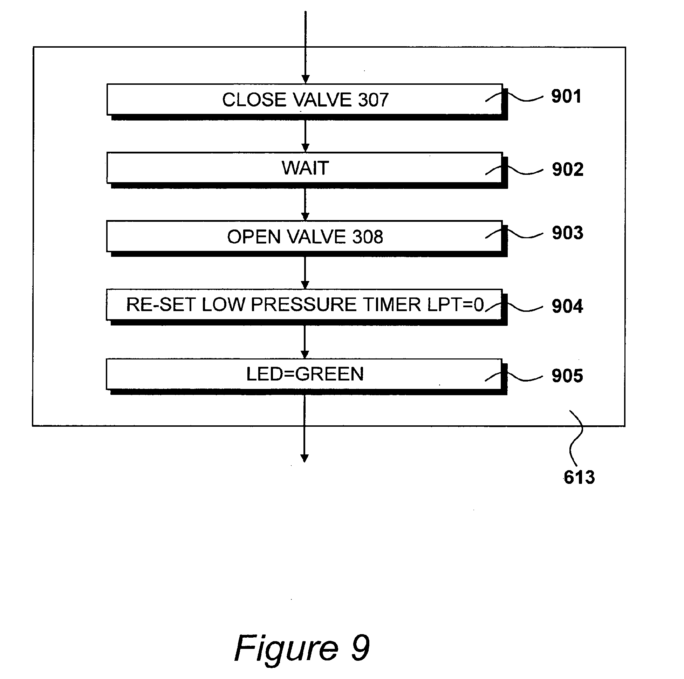

The everything satisfactory condition asserted at step 613 of Figure 6 is detailed in Figure 9. At step 901 valve 307 is closed so as prevent further water entering the system. Thereafter, at step 902 the process enters a short wait state.

At step 903 valve 308 is opened thereby opening cavity 305 to atmospheric pressure.

At step 904 the low pressure timer is reset equal to zero. Whereafter, at step 905, a continuous green light is emitted by LED 415.

### Figure 10

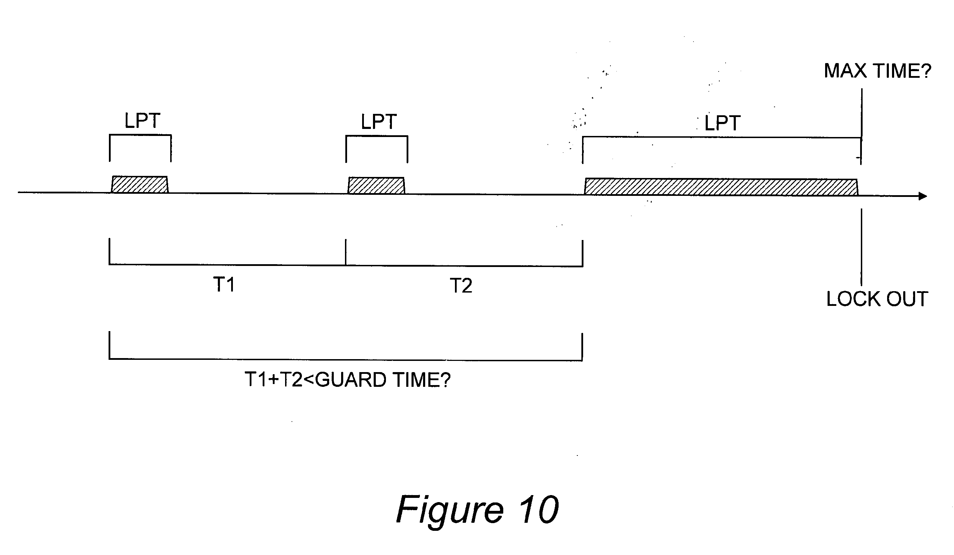

A visual illustration of the various timers used in the instruction flow chart is illustrated in Figure 10. T1 and T2 in combination measure the proximity in time of three successive low pressure events. LPT measures the duration of individual low pressure events. If T1 plus T2 is less than the guard time or if LPT goes above the maximum time permitted for a single low pressure event a second unsatisfactory condition is identified. Consequently, a lockout occurs, the heat source is shut down and valve 307 is closed to prevent flooding.

## Claims

1. Monitoring apparatus having pressure detection means, a valve and processing means, wherein said processing means is configured to:
receive an input signal from said pressure detection means;
assess whether said input signal represents a satisfactory condition or a first unsatisfactory condition; and
activate said valve if said input signal represents said first unsatisfactory condition.

2. Apparatus according to claim 1, including an output port, wherein
said processing means is also configured to assess whether said input signal represents a second unsatisfactory condition, and to
supply an output signal to said output port upon detecting said second unsatisfactory condition.

3. Apparatus according to claim 2, wherein said processing means makes an assessment as to whether said second unsatisfactory condition has occurred with reference to occurrences of said first unsatisfactory condition.

4. Apparatus according to claim 3, wherein said processing means makes an assessment as to whether said second unsatisfactory condition has occurred dependent upon the number of occurrences of said first unsatisfactory condition within a predetermined period of time.

5. A system for conveying a fluid within a closed system at a pressure displaced from atmospheric pressure having apparatus attached thereto according to any of claims 1 to 4, wherein
said pressure detection means is configured to measure the pressure of said fluid; and
said first unsatisfactory condition represents an unsatisfactory movement in pressure towards atmospheric pressure; and
said valve is activated to bring said pressure back to its displaced condition.

6. A system according to claim 5, wherein said pressure is increased to a value above atmospheric pressure.

7. A system according to claim 6, wherein said first unsatisfactory condition is identified by an unacceptable drop in pressure and said valve is activated so as to restore pressure by introducing additional fluid into the system.

8. A system according to claim 7, wherein said second unsatisfactory condition is identified if unacceptable drops in pressure occur too often thereby identifying a fluid leak.

9. A system according to claim 8, wherein an identification of said second unsatisfactory condition results in the generation of a shut down condition, thereby reducing further leakage.

10. A system according to any of claims 5 to 9, wherein said fluid is water.

11. A method of monitoring a system in which water is conveyed under pressure within a system, comprising the steps of
measuring the pressure of said water;
detecting a first condition when said pressure has dropped below a predetermined value;
detecting a second condition when said first condition has been detected previously;
allowing additional water to be introduced upon detecting said first condition; but
not allowing additional water to be introduced upon detecting said second condition.

12. A method according to claim 11, wherein said system is shut down upon detecting said second condition.

13. In a central heating system having a heat source, a plurality of radiators and a pump for pumping water around a system connecting said heat source with said radiators,
detecting apparatus configured to detect a reduction in operating pressure and to increase operational pressure by introducing additional water into said system.

14. Detecting apparatus according to claim 13 further configured to identify a persistent problem and to shut down said system in response to the identification of said persistent problem.

15. Detecting apparatus according to claim 14, wherein a persistent problem is identified when a detected reduction in operating pressure persists for longer than a first predetermined interval.

16. Apparatus according to claim 14 or claim 15, wherein a persistent problem is identified is a predetermined number of detected operating pressure reductions occur within a second predetermined interval.

17. A method of detecting leaks in a pressurised water system, comprising the steps of
monitoring water pressure;
detecting a water pressure reduction;
supplying additional water to said system; and
assessing whether normal operation may continue, and
preventing further operation in said system in response to said assessment step.

18. A method according to claim 17, wherein, after supplying additional water, one of the following steps is performed, namely:
a) normal operation continues; or
b) the system is shut down because the reduced pressure condition has persisted for to long; or
c) the system is shut down because reduced pressure conditions are being detected too regularly.

19. A machine readable medium containing instructions executable by a solid state processing device embedded into a monitoring device such that, when executing said instructions said processing device will perform the steps of:
monitoring an output signal from a pressure detector to identify whether system pressure has dropped below a specified value;
activating an inlet valve so as to increase system pressure to a preferred value; and
generating a disabling condition to disable said system if a persistent problem is identified.

20. A machine readable medium containing instructions according to claim 19, such that when executing said instructions the processing device will identify a persistent problem by:
(a) measuring the duration of a low pressure condition; or
(b) identifying a plurality of low pressure conditions within a predetermined interval.
